# EUROPÄISCHE PATENTSCHRIFT

(11) **EP 1 140 555 B1**
(45) Veröffentlichungstag und Bekanntmachung des Hinweises auf die Patenterteilung: **15.11.2006**
(21) Anmeldenummer: 99966858.5
(22) Anmeldetag: 14.12.1999
(51) Int. Cl.: B60N 2/075, B60J 7/02

(54) **SCHIENE ZUR FÜHRUNG VON LAUFSCHIENEN VON KFZ-KOMPONENTEN UND VERFAHREN ZU IHRER HERSTELLUNG**
RAIL FOR GUIDING SLIDE RAILS OF AUTOMOBILE COMPONENTS AND METHOD FOR PRODUCING THE SAME
RAIL DE GUIDAGE DE GLISSIERE DE COMPOSANTES DE VEHICULES ET SON PROCEDE DE PRODUCTION

(30) Priorität: 15.12.1998 DE 19857814
(43) Veröffentlichungstag der Anmeldung: 10.10.2001
(73) Patentinhaber: Federal-Mogul Wiesbaden GmbH, 65201 Wiesbaden (DE)
(72) Erfinder: WILHELM, Maik, D-65468 Trebur (DE)
(74) Vertreter: Fuchs Mehler Weiss & Fritzsche
(86) Internationale Anmeldenummer: PCT/DE1999/003980
(87) Internationale Veröffentlichungsnummer: WO 2000/035705

(56) Entgegenhaltungen:
- EP-A- 0 394 623
- EP-A- 0 753 425
- EP-A- 0 834 419
- DE-A- 3 623 007
- DE-A- 3 724 758
- DE-C- 4 107 129
- FR-A- 2 595 594

## Beschreibung

Die Erfindung betrifft ein Verfahren zur Herstellung einer Schiene zur Führung von Kfz-Komponenten, insbesondere von Sitzen, Türen und Schiebedächern, mit Führungsflächen.

Führungsschienen werden im Kfz-Bereich hauptsächlich für die Sitzverstellung eingesetzt, die möglichst leichtgängig sein soll. Es werden hierfür im allgemeinen Blechteile verwendet, die so umgeformt werden, daß eine Führung der korrespondierenden Laufschiene in horizontaler und vertikaler Richtung gewährleistet ist. Diesen Schienenführungen ist gemeinsam, daß separate Gleitelemente in Form von Einlegeteilen, Wälzlagern und dergleichen montiert werden müssen, um eine leichtgängige Verstellbarkeit zu gewährleisten.

Aus der DE-OS 43 05 508 A1 ist eine Schienenführung mit einer äußeren und einer inneren Schiene bekannt, die beide einen U-förmigen Querschnitt aufweisen. Zwischen beiden Schienen sind Kugellager angeordnet, die eine leichte Verschiebbarkeit der beweglichen Schiene ermöglichen. Die Formgebung der beiden Schienen ist so gewählt, daß die Kugellager in den vorgesehenen Positionen von den Schienen gehalten werden.

Eine Ausführung mit Rollen zwischen beiden Schienen wird in der DE-OS 37 24 758 A1 beschrieben. Die Rollen werden mittels eines Käfigs geführt, der aus einem Kunststoff mit den erforderlichen Gleiteigenschaften besteht. Der Käfig wird während der Verschiebung der Sitzschiene relativ zur Führungsschiene ebenfalls bewegt und dient zusätzlich zur Führung der Sitzschiene in horizontaler Richtung. Eine Formanpassung von Führungsschiene und Sitzschiene ist wegen des vorhandenen Käfigs nicht vorgesehen.

Die DE-OS 32 26 585 A1 beschreibt eine Schienenkonstruktion, bei der die beiden Schienen jeweils aus verschweißten Einzelteilen bestehen. Rollkörper zur Führung und Aufnahme der vertikalen Belastung sind zwischen den beiden Schienen angeordnet. Zur seitlichen Führung sind entsprechende Flansche vorgesehen, die den Nachteil besitzen, daß bei einer Verstellung der Laufschiene Metallteile aufeinandergleiten, so daß Schmiermittel zur Reibungsminderung eingesetzt werden müssen. Auch ist vorgesehen, auf Rollkörper gänzlich zu verzichten und Schiene auf Schiene gleiten zu lassen, wobei aber nicht mitgeteilt wird, wie die Gleitreibung und der Verschleiß vermindert wird.

Der Nachteil derartiger Schienenführungen besteht darin, daß außer den beiden Schienen noch weitere Bauteile wie Kugellager, Rollen oder Käfige montiert werden müssen. Um eine Führung in allen drei Raumrichtungen sicherzustellen, ist meist eine komplizierte Formgebung beider Schienen erforderlich, wobei die beiden Schienen insbesondere im Bereich der seitlichen Führung aneinandergleiten, so daß dort eine Schmierung, in der Regel ein Schmierfett, eingesetzt werden muß. Im Gebrauch, d.h. durch die Verstellung der Schienen, lösen sich Schmierminelpartikel ab, die die Umgebung, d.h. den Fahrzeuginnenraum verschmutzen. Wenn Gleitkörper als Einlegeteile vorgesehen werden, müssen diese ebenfalls geführt werden, wobei diese je nach Belastung nach längerer Gebrauchsdauer Verformungen aufweisen können und die Verschiebung der Schienen beeinträchtigen können.

Die DE 41 07 129 C1 beschreibt eine Führungsanordnung für verstellbare Teile von Fahrzeugdächem mit mindestens einer Längsführung, entlang derer mindestens eine Gleitbacke verschiebbar geführt ist. Die Längsführung ist mindestens in dem mit der Gleitbacke in Gleitkontakt kommenden Bereich mit einem Festschmierstoff beschichtet. Als organischer Festschmierstoff ist vorzugsweise ein Einbrenn-Gleitlack vorgesehen, der aus einer Dispersion von PTFE in einen organischen Bindemittel und Lösungsmittel besteht. Der Einbrenn-Gleitlack wird durch Tauchlackieren aufgebracht.

Es ist Aufgabe der Erfindung, ein kostengünstiges Verfahren zur Herstellung der Führungsschiene anzugeben.

Die Aufgabe wird durch ein Verfahren gemäß Patentanspruch 1 gelöst. Die dabei hergestellte Schiene weist mindestens im Bereich der Führungsflächen der Schiene eine aus mindestens einer Schicht bestehende Gleitbeschichtung auf.

Dadurch, daß eine Gleitbeschichtung auf der Führungsschiene aufgebracht ist, werden keine weiteren zusätzlich zu montierenden Gleitelemente wie Kugellager und dergleichen benötigt. Der Zusammenbau von Führungsschiene und Laufschiene wird dadurch erheblich vereinfacht.

Ein weiterer Vorteil besteht darin, daß eine Gleitbeschichtung im Gegensatz zu Kugellagern und dergleichen nur einen geringen Platz zwischen den Schienen benötigt, wodurch eine insgesamt kompakte Schienenführung gegebenenfalls auch mit Gewichtsersparnis erzielt wird.

Gleitbeschichtungen sind selbstschmierend und benötigen kein zusätzliches Gleitmittel, so daß die Umgebung der Schienenführung nicht schmutzsammelnd wirkt. Darüber hinaus ist eine Schienenführung mit einer erfindungsgemäßen Führungsschiene wartungsfrei.

Die Gleitschichtflächen sind vorzugsweise so groß zu wählen, daß die spezifische Flächenbelastung bei dem späteren Umformprozeß durch Niederhalter ca. 200 MPa nicht übersteigt und in der Funktion eine geringe Betriebsverschleißrate erzielt wird. Andererseits bestimmt die Reibung ein günstiges Flächenverhältnis. Spezifische Belastungen größer 10 MPa garantieren einen Reibwert kleiner 0,1.

Als Gleitbeschichtung können sämtliche aus der Gleitlagerherstellung bekannten Beschichtungen verwendet werden.

Vorzugsweise besteht die Gleitbeschichtung aus einer Kunststoffschicht. Als Kunststoffschicht können beispielsweise gefülltes PTFE, gefülltes PPS, gefülltes PVDF, PDM oder PEEK eingesetzt werden.

Gemäß einer weiteren Ausführungsform kann die Gleitbeschichtung auch mehrere Schichten, insbesondere zwei Schichten aufweisen, wobei eine Schicht aus einer Sinterbronze besteht und eine weitere Schicht aus Kunststoff.

Das Verfahren zur Herstellung einer solchen Führungsschiene sieht vor, daß auf einem Metallband kontinuierlich eine Gleitbeschichtung aufgebracht wird, daß das beschichtete Band auf Länge und Breite geschnitten wird und erst anschließend die geschnittenen Bandstücke umgeformt werden.

Der Vorteil des Verfahrens besteht darin, daß bereits in einem frühen Stadium, d.h. vor dem Umformen, die Gleitbeschichtung in den Bereichen aufgebracht wird, in denen nach dem Umformen und nach dem Zusammenbau der entsprechende Gleitpartner, d.h. die dazugehörige Laufschiene, anliegt. Das Beschichtungsverfahren wird dadurch weitaus einfacher im Vergleich zur Beschichtung bereits umgeformter Metallstücke, weil die Innenflächen meistens nicht gut zugänglich sind.

Beim Umformen wird die Gleitbeschichtung je nach Material in der Regel nicht beschädigt. Bei extremem Verhältnis Wanddicke/Biegeradius kann es jedoch von Vorteil sein, wenn das Metallband an diesen Biegestellen freiliegt oder vor dem Umformen freigelegt wird.

Da nicht das gesamte Band beschichtet werden muß, sondern nur die Flächen, die die späteren Führungsflächen bilden, reicht eine selektive Beschichtung des Metallbandes aus. Die selektive Beschichtung des Bandes bietet den Vorteil, daß nur soviel Beschichtungsmaterial benötigt wird, wie später für die Führungsflächen zur Verfügung stehen muß.

Gemäß einer anderen Ausführungsform kann das Metallband auch flächig beschichtet werden, wobei das Gleitschichtmaterial an den gewünschten Stellen während oder nach der Beschichtung entfernt wird.

Vorzugsweise wird auf das Metallband eine Kunststoffolie aufgeklebt.

Gemäß einer weiteren Ausführungsform wird auf dem Metallband zuerst eine Bronzeschicht aufgebracht und diese Bronzeschicht gesintert. Anschließend wird eine Kunststoffschicht aufgebracht.

Vor dem Aufbringen der Beschichtung wird das Metallband nach bekannten Verfahren entfettet und aufgerauht.

Wenn aus breiten Bändern in Querrichtung gesehen mehrere Halbzeugelemente für die Schienenherstellung erzeugt werden sollen, ist es von Vorteil, wenn die Schnittlinie in Längsrichtung des Bandes so gelegt wird, daß keine zusätzliche Bearbeitung, d.h. ein Entfernen von Gleitschichtmaterial notwendig wird. Vorzugsweise wird der Schnitt zur Festlegung der Schienenbreite mittig in den beschichteten Bereich und/oder mittig in den unbeschichteten Bereich gelegt.

Beispielhafte Ausführungsformen werden nachfolgend anhand der Zeichnungen näher erläutert.

Es zeigen:
- Fign. 1a u. 1b: perspektivische Darstellungen des Halbzeuges mit aufgebrachter Beschichtung,
- Fig. 2: eine aus dem in Fig. 1b dargestellten Halbzeug gefertigte Schiene zusammen mit einer Laufschiene in perspektivischer Darstellung,
- Fign. 3a u. 3b: perspektivische Darstellungen des Halbzeuges gemäß einer weiteren Ausführungsform und
- Fig. 4: eine aus dem in der Fign. 3b dargestellten Halbzeug gefertigte Führungsschiene zusammen mit einer Laufschiene in perspektivischer Darstellung.

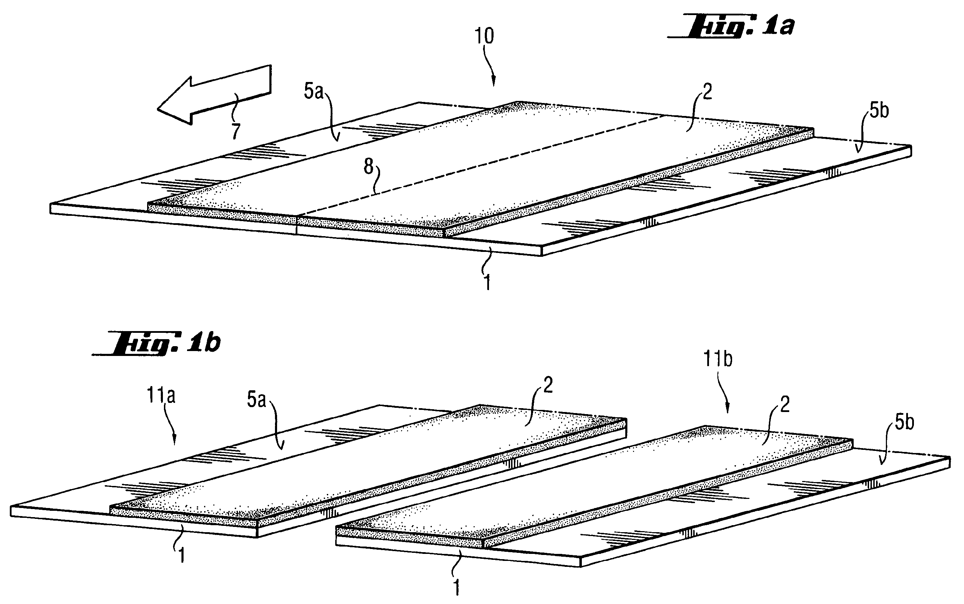

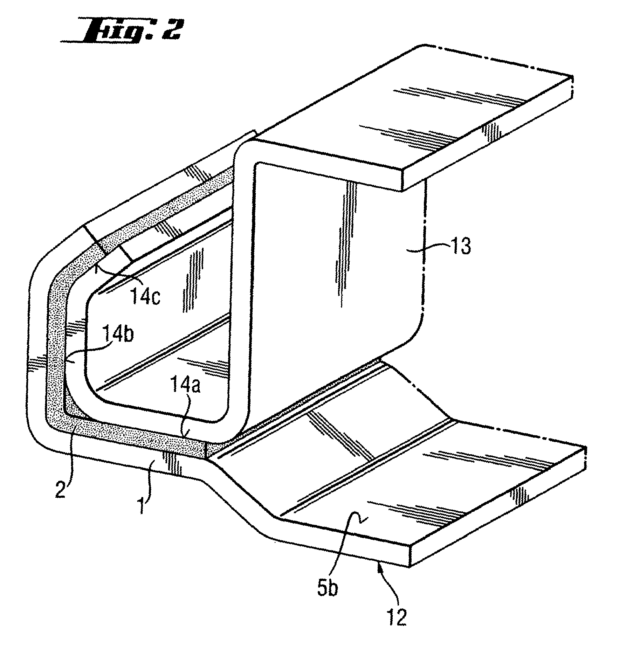

In der Fig. 1 ist ein Metallband 1 dargestellt, das kontinuierlich in Längsrichtung 7 bewegt wird und in einer geeigneten Beschichtungseinrichtung mit einer Gleitbeschichtung 2 versehen wird, die in der hier gezeigten Ausführungsform nur aus einer einzigen Schicht, beispielsweise aus einer Kunststoffschicht besteht, die unmittelbar auf das Metallband 1 aufgebracht worden ist. Die Gleitbeschichtung 2 ist nur im mittleren Bereich des Bandes 1 aufgebracht worden, so daß die Ränder 5a und 5b des Metallbandes 1 frei bleiben. Die Anordnung der Gleitbeschichtung 2 auf dem Metallband 1 ist so gewählt worden, daß sich die Gleitbeschichtung, wie im Zusammenhang mit der Fig. 2 noch erläutert wird, nur in dem Bereich befindet, wo sich nach dem Umformprozeß zu einer Schiene die Führungsflächen befinden. Das beschichtete Band 10 besitzt eine solche Breite, daß in Querrichtung gesehen jeweils zwei Schienen hergestellt werden können. Dementsprechend verläuft die Schnittlinie 8 mittig im Bereich der Gleitbeschichtung 2.

In der Fig. 1b ist das beschichtete Band 10 in Längsrichtung durchtrennt dargestellt, wodurch zwei Bandabschnitte 11a und 11b erhalten werden, die in einem anschließenden Umformvorgang zu einer Schiene 12 verarbeitet werden, die in der Fig. 2 in perspektivischer Darstellung zu sehen ist. Die Schiene 12 besitzt eine im wesentlichen U-förmige Ausgestaltung, wobei sich im linken Bereich die Gleitbeschichtung 2 befindet. Dort liegt die Laufschiene 13 an, deren Formgebung an die Gestalt der Führungsschiene 12 angepaßt ist. Durch den Umformprozeß werden aus dem Bereich der Gleitbeschichtung 2 insgesamt drei Führungsflächen 14a,14b,14c gebildet. Die Gleitbeschichtung 2 ist somit ausschließlich auf diese Führungsflächen beschränkt.

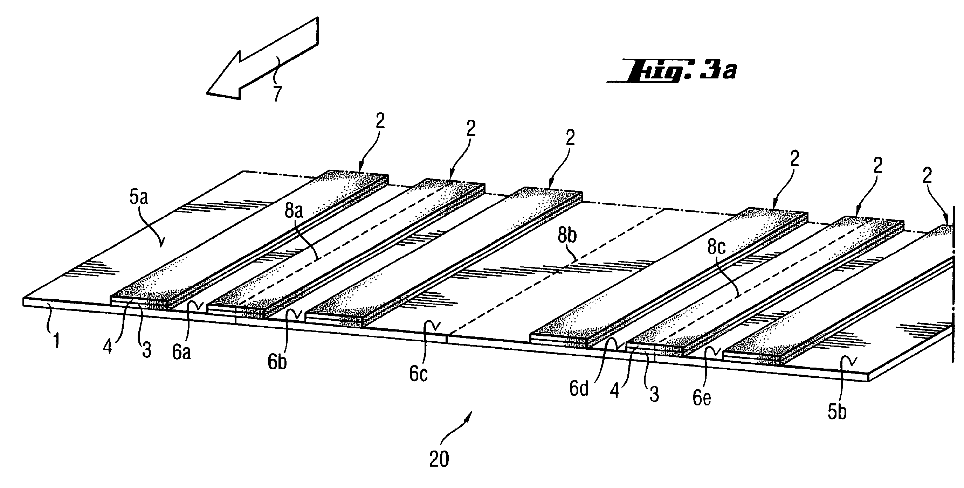

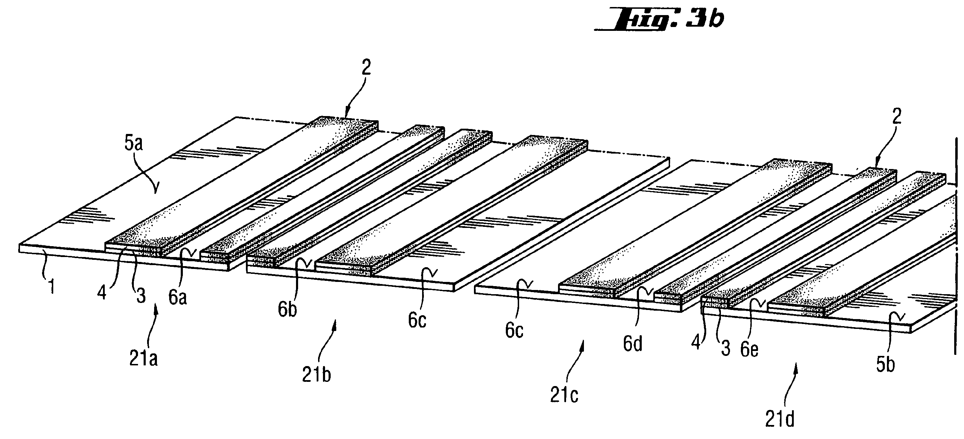

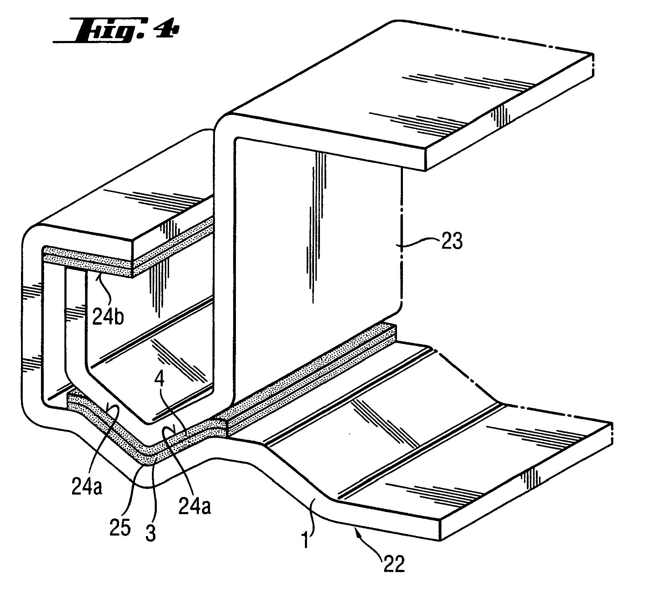

In der Fig. 3a ist eine weitere Ausführungsform des Halbzeuges dargestellt. Es handelt sich hierbei um ein breiteres Band, aus dem Führungsschienen hergestellt werden, wie sie in der Fig. 4 zu sehen sind. Auf dem Metallband 1 sind insgesamt 6 streifenförmige Bereiche mit der Gleitbeschichtung 2 versehen. Die Streifen der Gleitbeschichtung 2 können durch selektive Beschichtung während des Beschichtungsvorgangs hergestellt werden. Es besteht aber auch die Möglichkeit, nach einer weitgehend vollflächigen Beschichtung durch entsprechend ausgeführte Rakel die Bereiche 6a bis 6e nachträglich freizulegen. Die Randbereiche 5a und 5b sind auch bei dieser Ausführungsform von der Beschichtung ausgenommen.

Die Gleitbeschichtung 2 besteht in dieser Ausführungsform aus insgesamt zwei Schichten, nämlich einer Sinterbronzeschicht 3 und einer Kunststoffgleitschicht 4.

Die Anordnung der Streifen der Gleitbeschichtung 2 ist so gewählt, daß insgesamt in Querrichtung gesehen 4 Gleitschienen gefertigt werden können. Dementsprechend wurden die Schnittlinien 8a bis 8c jeweils mittig entweder in den Gleitschichtbereich 2 oder mittig in einen der freiliegenden Bereiche, in der hier gezeigten Ausführungsform in den freiliegenden Bereich 6c, gelegt.

Nach dem Durchtrennen des beschichteten Bandes 20 durch entsprechende Schnitte in Längsrichtung gemäß den Linien 8a bis 8c erhält man die einzelnen Bandabschnitte 21a bis 21d, die in der Fig. 3b dargestellt sind. Jeder Bandabschnitt 21a bis 21d weist zwei streifenförmige Bereiche mit der Gleitbeschichtung 2 auf. Diese einzelnen Bandabschnitte 21a bis 21d werden zu jeweils einer Führungsschiene 22 umgeformt, wie dies in der Fig. 4 dargestellt ist. Die beiden Bereiche der Gleitbeschichtung 2 bilden die beiden Führungsflächen 24a und 24b, wobei die Führungsfläche 24a in Form einer Längsnut 25 ausgebildet ist. Diese Längsnut 25 bietet den Vorteil, daß nicht nur eine Führung in vertikaler, sondern auch eine Führung in horizontaler Richtung sichergestellt ist, so daß eine dritte Führungsfläche, wie dies in der Fig. 2 zu sehen ist, nicht erforderlich ist. Auch diese Führungsschiene 22 besitzt einen im wesentlichen U-förmigen Querschnitt.

### Bezugszeichen

- 1: Metallband
- 2: Gleitbeschichtung
- 3: Sinterbronze
- 4: Kunststoffschicht
- 5a,b: Randbereich
- 6a-6e: freiliegender Bereich
- 7: Längsrichtung des Bandes
- 8a,b,c: Schnittlinie
- 10: beschichtetes Band
- 11a,b: beschichteter Bandabschnitt
- 12: Schiene
- 13: Laufschiene
- 14a,b,c: Führungsfläche
- 20: beschichtetes Band
- 21a-d: beschichteter Bandabschnitt
- 22: Schiene
- 23: Laufschiene
- 24a,b: Führungsfläche
- 25: Nut

## Patentansprüche

1. Verfahren zur Herstellung einer Schiene zur Führung von Kfz-Komponenten, insbesondere von Sitzen, Türen und Schiebedächern, **dadurch gekennzeichnet,**
**dass** auf ein Metallband kontinuierlich eine Gleitbeschichtung aufgebracht wird,
**dass** das beschichtete Band auf Länge und Breite geschnitten wird und dass die geschnittenen Bandabschnitte umgeformt werden.

2. Verfahren nach Anspruch 1, **dadurch gekennzeichnet, dass** die Gleitbeschichtung in Form einer aufgeklebten Kunststofffolie aufgebracht wird.

3. Verfahren nach Anspruch 1 oder 2, **dadurch gekennzeichnet, dass** auf das Metallband zuerst eine Bronzeschicht aufgebracht wird und diese Bronzeschicht gesintert wird und
dass anschließend eine Kunststoffschicht aufgebracht wird.

4. Verfahren nach einem der Ansprüche 1 bis 3, **dadurch gekennzeichnet, dass** das Metallband selektiv beschichtet wird.

5. Verfahren nach einem der Ansprüche 1 bis 4, **dadurch gekennzeichnet, dass** während oder nach der Beschichtung die Gleitbeschichtung selektiv entfernt wird.

6. Verfahren nach einem der Ansprüche 1 bis 5, **dadurch gekennzeichnet, dass** der Längsschnitt zur Festlegung der Schienenbreite mittig in den beschichteten Bereich und/oder mittig in den unbeschichteten Bereich gelegt wird.

7. Verfahren nach einem der Ansprüche 1 bis 6, **dadurch gekennzeichnet, dass** die Kunststoffschicht aus gefülltem PTFE, gefülltem PPS, gefülltem PVDF, PDM oder PEEK besteht.

## Claims

1. Method of making a rail for guiding automotive components, in particular seats, doors and sliding roofs, **characterized in that** a sliding coating is continuously applied to a metal strip, that the coated strip is cut to length and width, and that the cut strip sections are shaped.

2. Method according to Claim 1, **characterized in that** the sliding coating is applied in the form of an adhesive synthetic film.

3. Method according to Claim 1 or 2, **characterized in that** a bronze layer is first applied to the metal strip and this bronze layer is sintered, and that a synthetic layer is then applied.

4. Method according to one of Claims 1 to 3, **characterized in that** the metal strip is coated selectively.

5. Method according to one of Claims 1 to 4, **characterized in that** the sliding coating is removed selectively during or after coating.

6. Method according to one of Claims 1 to 5, **characterized in that** the longitudinal cut for determining the rail width is placed centrally in the coated region and/or centrally in the uncoated region.

7. Method according to one of Claims 1 to 6, **characterized in that** the synthetic layer consists of filled PTFE, filled PPS, filled PVDF, PDM or PEEK.

## Revendications

1. Procédé pour la fabrication d'un rail de guidage de composantes de véhicules, notamment de sièges, de portes et de toits ouvrants,
**caractérisé en ce que**
- on applique en continu un revêtement de glissement sur une bande de métal;
- on coupe la bande revêtue à la longueur et à la largeur désirées, et on déforme les segments de bande coupés.

2. Procédé selon la revendication 1, **caractérisé en ce que** l'on dépose le revêtement de glissement sous la forme d'un film de plastique collé.

3. Procédé selon la revendication 1 ou 2, **caractérisé en ce que**
- on dépose d'abord une couche de bronze sur la bande de métal et on fritte cette couche de bronze, et
- on dépose ensuite une couche de plastique.

4. Procédé selon l'une quelconque des revendications 1 à 3, **caractérisé en ce que** l'on revêt sélectivement la bande de métal.

5. Procédé selon l'une quelconque des revendications 1 à 4, **caractérisé en ce que** l'on enlève sélectivement le revêtement de glissement pendant ou après l'opération de revêtement.

6. Procédé selon l'une quelconque des revendications 1 à 5, **caractérisé en ce que** l'on applique la coupe longitudinale pour fixer la largeur du rail au milieu de la zone revêtue et/ou au milieu de la zone non revêtue.

7. Procédé selon l'une quelconque des revendications 1 à 6, **caractérisé en ce que** la couche de plastique se compose de PTFE chargé, de PPS chargé, de PVDF chargé, de PDM ou de PEEK.
